# EUROPEAN PATENT SPECIFICATION

(11) **EP 0 465 231 B1**
(45) Date of publication and mention of the grant of the patent: **06.12.1995**
(21) Application number: 91306019.0
(22) Date of filing: 02.07.1991
(51) Int. Cl.: G06K 11/12, G06K 11/10

(54) **Surface area contact pressure transducer**
Oberflächenkontaktdruckwandler
Transducteur de pression de contact sur une surface

(30) Priority: 06.07.1990 JP 179735/90
(43) Date of publication of application: 08.01.1992
(73) Proprietor: ENIX CORPORATION, Shinjuku-ku, Tokyo (JP)
(72) Inventor: Tamori, Teruhiko, Iruma-shi, Saitama-ken (JP)
(74) Representative: Lawrence, John Gordon

(56) References cited:
- EP-A- 0 194 638
- INTERNATIONAL JOURNAL OF ROBOTICS RESEARCH vol. 1, no. 2, 1982, CAMBRIDGE MA US pages 33 - 44; W. DANIEL HILLIS: 'A high-resolution imaging touch sensor'
- NAVY TECHNICAL DISCLOSURE BULLETIN. vol. 8, no. 4, June 1983, ARLINGTON US pages 83 - 86; HAYDEN MORRIS: 'A dual resistivity thin film hybrid microcircuit.'

## Description

### BACKGROUND OF THE INVENTION

### FIELD OF THE INVENTION

The present invention relates to a surface area contact pressure transducer for use in detection of a minute surface area contact pressure distributions such as a fingerprint.

### DESCRIPTION OF THE PRIOR ART

According to known conventional methods of measuring the two-dimensional distribution of a load acting on a surface of an object, a large number of load cells or electrode pairs are arranged in a matrix form, and these transducers are scanned (e.g., Japanese Unexamined Patent Publication (Kokai) Nos. 62-71828 and 62-226030). These transducers are used to measure the distribution of a load or pressure acting on a seat of a vehicle or a fingertip of a robot.

Among these transducers, an element such as a load cell on electrode pair has a relatively large size. Therefore, the transducers can be suitably used to measure a two-dimentional pressure distribution on the avove-mentioned object. However, they are not suitable for measurement of a contact pressure distribution on a high-density portion such as a fingerprint having four epidermal ridges per millimeter.

Under these circumstances, the present inventor proposes a detecting device in Japanese Unexamined Patent Publication (Kokai) No. 63-310087. In this device, a pressure-sensitive sheet as of conductive rubber whose resistance is changed in accordance with an applied pressure is used to measure a minute surface area contact pressure distribution such as a fingerprint, and changes in resistance based on the contact pressure distribution are extracted by electrical scanning.

In addition, a measuring device disclosed in Japanese Unexamined Patent Publicaiton (Kokai) No. 62-226030 is known. In this device, a large number of electrode pairs are arranged to oppose each other in a matrix form. In this arrangement, when a pressure is applied to given electrode pairs, the intervals between the electrode pairs are changed. The capacitances formed by these electrode pairs are then changed. A contact pressure distribution is measured by detecting such changes in capacitance.

The present inventor manufactured a sample of the above-mentioned device, and conducted various experiments to detect a minute surface area contact pressure distribution. As a result, it was found that the device required various elaborate techniques in manufacturing, and small pressure changes were difficult to detect with high precision. In addition to such practical problems, it was found that contact resistance, which can be substantiallly neglected on a macroscopic scale, could be very influential on a microscopic scale.

### SUMMARY OF THE INVENTION

In consideration of such a contact resistance, the present inventor aims at detection of a minute surface area contact pressure distribution on the basis of changes in contact resistance caused by change in contact area. It is an object of the present invention to provide a transducer for detecting a minute surface area contact pressure distribution with a simple arrangement. In order to achieve the above object, there is provided a transducer for detecting surface area contact pressure distribution according to claim 1.

### BRIEF DESCRIPTION OF THE DRAWINGS

Fig. 1 is a partially cutaway perspective view showing a transducer for detecting surface area contact pressure distribution according to an embodiment of the present invention, and
Fig. 2 is a view showing the transducer in Fig. 1 together with wires.

### DETAILED DESCRIPTION OF THE PREFERRED EMBODIMENTS

The present invention will be described below with reference to the accompanying drawings.

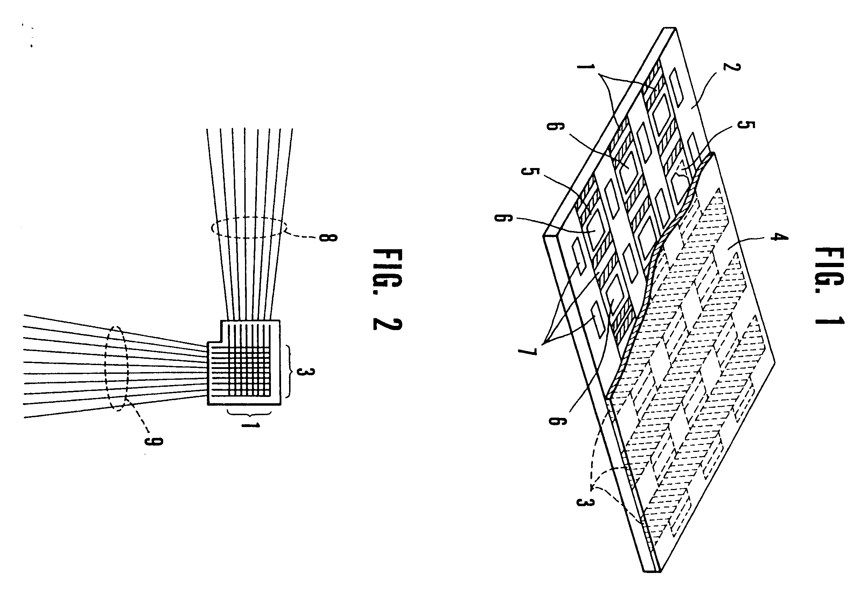

Fig. 1 shows a surface area contact pressure transducer according to an embodiment of the present invention. The transducer is designed such that a film 4 on which scanning electrodes 3 are formed in the Y-axis direction is bonded to a surface of an insulating substrate 2 on which scanning electrodes 1 are formed in the X-axis direction.

More specifically, a silver or copper layer having a thickness of about 10 » m is formed on the entire surface of the ceramic substrate 2 having a thickness of 0.8 mm. This layer is formed by deposition or sputtering. The scanning electrodes 1 are formed in the X-axis direction by etching. The scanning electrode 1 has a width of, e.g., 25 to 50» m, and the distance between the electrodes 1 is, e.g., 25 to 50» m.

Subsequently, a thin film resistor having a thickness of about 2» m is formed on the entire surface of the ceramic substrate 2, on which the scanning electrodes 1 are formed, by deposition, and thin film resistors 5 are formed on the scanning electrodes 1 at equal intervals by photoetching. Each thin film resistor5 has a resistance of several 100 Ω to a few k Ω in the direction of thickness.

A gold layer is formed on the entire surface of the ceramic substrate 2 over the thin film resistors 5 by deposition and contact electrodes 6 each having a smaller area than the thin film resistor 5 is formed on each thin film resistor 5 by photoetching. The contact electrode 6 is effective to provide a good electrical contact between the thin film resistor 5 and scanning electrodes 3 which will be described hereinafter.

An oxide or tungsten dioxide layer is deposited on the entire surface of the ceramic substrate 2 to a thickness of about 17» m, and spacers 7 are formed on the scanning electrodes 1 between the thin film resistors 5 and are formed between the thin film resistors 5 on the adjacent scanning electrodes 1 by photoetching.

Copper is deposited on an entire surface of a polyimide, polyamide or polyester film 4, and scanning electrodes 3 are formed on the film 4 in the Y-axis direction by etching. The film 4 is then bonded to the ceramic substrate 2 by using an anisotropic adhesive in such a manner that the scanning electrodes 3 are mounted on the thin film resistors 5 on the ceramic substrate 2 so as to be orthogonal to the scanning electrodes 1. The scanning electrodes 3 are gilded to prevent corrosion. The width of each of the scanning electrodes 3 in the Y-axis direction and the interval therebetween are the same as those set for the scanning electrodes 1 in the X-axis direction. In this manner, the basic arrangement of a matrix-like surface area contact pressure transducer is completed.

Fig. 2 shows the detecting element manufactured in the above-described steps together with wires for extracting outputs. The scanning electrodes 1 in the X-axis direction are connected to wires 8, and the scanning electrodes 3 in the Y-axis direction are connedted to wires 9.

Scanning signals are sequentially supplied to the scanning electrodes 1 and 3 of the X- and Y-axis directions from an external circuit (not shown) through the wires 8 and 9 at predetermined timings.

A method of driving the detecting transduecr, a driving circuit, and a pressure resistance detecting circuit are irrelevant to the gist of the present invention and hence are not described in detail here. However, Japanese Patent Application No. 63-236212 as a prior invention by the present inventor may be incorporated herein as needed.

Assume that a fingerprint is to be detected by using the above-described detecting transducer. For example, the detecting transducer is formed as an element having an area of 1.28 cm x 2.56 cm. When a finger from which a fingerprint is to be detected is placed on the element (having an upper surface covered with a protective thin film), and the element is slightly depressed, the pressure acting on the element varies at positions corresponding to the ridges and recesses of the fingerprint pattern. Since the thin film resistors 5 at the intersecting portions between the scanning electrodes 1 and 3 are depressed at the positions of the ridges of the fingerprint pattern, the contact resistances provided at the intersecting portions become relatively small depending upon the contact area of the two electrodes 1 and 3. In contrast to this, no pressure is applied to the thin film resistor 5 at the positions of the recesses of the fingerprint pattern, the corresponding contact resistances at the intersecting portions become relatively large depending upon the contact area of the two electrodes 1 and 3. A good electrical contact between the thin film resistor 5 and the scanning electrode 3 is provided at the intersecting portions by the contact electrode 6.

Since the scanning signals are sequentially applied to the scanning electrodes 1 and 3 at the predetermined timings, the contact resistances of the intersecting portions where the scanning signals are simultaneously applied to the scanning electrodes 1 and 3 are converted into current signals and extracted to the external circuit. A fingerprint pattern can be discriminated by processing these signals.

The surface area contact pressure transducer of the present invention is suitable not only for detection of a minute pattern such as a fingerprint but also for detection of an accurate pattern such as a seal impression or a signature. In the latter application, a plate whose surface is as soft as fuman finger is used instead of a hard ceramic substrate 2.

As has been described above, according to the present invention, a surface area contact pressure transducer is designed such that a plurality of first scanning electrodes are formed on a insulating substrate at small intervals, and a plurality of second scanning electrodes are formed on the first scanning electrodes at small intervals in a direction orthogonal to that of the first scanning electrodes. With this arrangement, a minute surface area contact pressure distribution can be detected as changes in contact resistance of thin film resistors. Therefore, a very simple element structure can be realized, and surface area contact pressure distribution can be accurately detected.

## Claims

1. A surface area contact pressure transducer comprising:
a substantially rigid insulating substrate (2);
a plurality of scanning row electrodes (1), formed by metal deposition on said substrate (2), etched to form a pattern of substantially parallel electrodes (1) which are spaced apart and oriented along a first axis;
a thin film resistive layer, deposited on the scanning row electrodes (1) and said substrate (2), having a resistance which varies as a function of contact area;
a substantially resilient deformable film (4);
a plurality of scanning column electrodes (3), formed by metal deposition on said film (4), etched to form a pattern of substantially parallel column electrodes (3) which are spaced apart, said film (4) being bonded to said substrate by an anisotropic adhesive so that said column electrodes (3) are mounted on the thin film resistive layer and oriented along a second axis which is orthogonal to said first axis, said film transmitting pressure distributions to said row electrodes (1), film resistive layer and column electrodes to form a matrix of variable contact resistances to provide analog information relating to the distribution of surface area contact pressure applied to said film (4).

2. The transducer according to Claim 1 wherein said contact electrode (6) comprises a gold layer.

3. The transducer according to Claim 1 wherein said scanning colomn electrodes (3) are gilded.

4. The transducer according to Claim 1 wherein said substantially rigid insulating substrate (2) comprises a ceramic layer.

5. The transducer according to Claim 1 wherein said substantially resilient deformable film (4) comprises a polyimide film.

6. The transducer according to Claim 1 wherein siad substantially resilient deformable film (4) comprises a polyamide film.

7. The transducer according to Claim 1 wherein said substantially resilient deformable film (4) comprises a polyester film.

8. The transducer according to Claim 1 wherein said metal deposition on said substrate to form said scanning row electrodes (1) comprises silver.

9. The transducer according to Claim 1 wherein said metal deposition on said substrate to form said scanning row electrodes (1) comprises copper.

10. The transducer according to Claim 1 wherein said metal deposition on said substantially resilient deformable film (4) to form said scanning column electrodes (3) comprises copper.

11. The transducer according to Claim 1 wherein said thin resistive layer is etched to form a thin film resistor film (5) which remains only at points of intersection of said row (1) and column electrodes (3).

12. The transducer according to Claim 11 further comprising a contact electrode (6) formed on each of said film resistor (5).

13. The transducer according to Claim 1 wherein a plurality of oxide spacers (7) are formed by oxide deposition on said substrate (2) and scanning row electrodes (1) and etched to form spacer islands at specified points.

14. The transducer according to Claim 13 wherein said oxide spacers (7) comprise tungsten dioxide.

## Patentansprüche

1. Ein Oberflächenkontaktdruckwandler, welcher aufweist:
ein im wesentlichen starres isolierendes Substrat (2);
mehrere Abtast-Reihenelektroden (1), die durch Metallabscheidung auf dem Substrat (2) gebildet sind und die geätzt sind zur Bildung eines Musters von im wesentlichen parallelen Elektroden (1), die einen gegenseitigen Abstand aufweisen und entlang einer ersten Achse ausgerichtet sind;
eine Dünnfilmwiderstandsschicht, die auf den Abtast-Reihenelektroden (1) und dem Substrat (2) niedergeschlagen ist, mit einem Widerstandswert, der sich als eine Funktion der Kontaktfläche ändert;
einen im wesentlichen elastischen verformbaren Film (4);
mehrere Abtast-Spaltenelektroden (3), die durch Metallabscheidung auf dem Film (4) gebildet sind und die geätzt sind zur Bildung eines Musters von im wesentlichen parallelen Spaltenelektroden (3), die einen gegenseitigen Abstand aufweisen, wobei der Film (4) durch ein anisotropes Haftmittel mit dem Substrat verbunden ist, so daß die Spaltenelektroden (3) auf der Dünnfilmwiderstandsschicht befestigt und entlang einer zweiten Achse ausgerichtet sind, welche orthogonal zu der ersten Achse ist, und wobei der Film Druckverteilungen zu den Reihenelektroden (1), der Filmwiderstandsschicht und den Spaltenelektroden überträgt zur Bildung einer Matrix von veränderlichen Kontaktwiderständen, um eine analoge Information in bezug auf die Verteilung des auf den Film (4) ausgeübten Oberflächenkontaktdrucks zu liefern.

2. Wandler nach Anspruch 1, worin die Kontaktelektrode (6) eine Goldschicht aufweist.

3. Wandler nach Anspruch 1, worin die Abtast-Spaltenelektroden (3) vergoldet sind.

4. Wandler nach Anspruch 1, worin das im wesentlichen starre isolierende Substrat (2) eine keramische Schicht aufweist.

5. Wandler nach Anspruch 1, worin der im wesentlichen elastische verformbare Film (4) einen polyimid-Film aufweist.

6. Wandler nach Anspruch 1, worin der im wesentlichen elastische verformbare Film (4) einen polyamid-Film aufweist.

7. Wandler nach Anspruch 1, worin der im wesentlichen elastische verformbare Film (4) einen polyester-Film aufweist.

8. Wandler nach Anspruch 1, worin die Metallabscheidung auf dem Substrat zur Bildung der Abtast-Reihenelektroden (1) Silber umfaßt.

9. Wandler nach Anspruch 1, worin die Metallabscheidung auf dem Substrat zur Bildung der Abtast-Reihenelektroden (1) Kupfer umfaßt.

10. Wandler nach Anspruch 1, worin die Metallabscheidung auf dem im wesentlichen elastischen verformbaren Film (4) zur Bildung der Abtast-Spaltenelektroden (3) Kupfer umfaßt.

11. Wandler nach Anspruch 1, worin die dünne Widerstandsschicht geätzt ist zur Bildung eines Dünnfilmwiderstandsfilms (5), der nur an den Punkten der Überschneidung der Reihen-(1) und Spaltenelektroden (3) verbleibt.

12. Wandler nach Anspruch 11, weiterhin eine auf jedem der Filmwiderstände (5) gebildete Kontaktelektrode (6) aufweisend.

13. Wandler nach Anspruch 1, worin mehrere Oxid-Abstandsstücke (7) durch eine Oxidabscheidung auf dem Substrat (2) und Abtast-Reihenelektroden (1) gebildet und geätzt sind zur Bildung von Abstandsinseln an bestimmten Punkten.

14. Wandler nach Anspruch 13, worin die Oxid-Abstandsstücke (7) Wolframdioxid aufweisen.

## Revendications

1. Transducteur de pression de contact sur une superficie, comprenant:
un substrat isolant sensiblement rigide (2);
plusieurs électrodes de lignes de balayage (1), formées par dépôt de métal sur ledit substrat (2), attaquées pour former un motif d'électrodes sensiblement parallèles (1) qui sont espacées et orientées suivant un premier axe;
une couche résistive de film mince déposée sur les électrodes de lignes de balayage (1) et sur ledit substrat (2), ayant une valeur de résistance qui varie en fonction de la superficie de contact;
un film déformable sensiblement élastique (4);
plusieurs électrodes de colonnes de balayage (3), formées par dépôt de métal sur ledit film (4), attaquées pour former un motif d'électrodes de colonnes (3) sensiblement parallèles qui sont espacées, ledit film (4) étant collé audit substrat par une colle anisotropique, de sorte que lesdites électrodes de colonnes (3) sont montées sur la couche résistive de film mince et orientées selon un second axe qui est orthogonal audit premier axe, ledit film transmettant la répartition de pression auxdites électrodes de lignes (1), à ladite couche résistive sous forme de film et auxdites électrodes de colonnes, pour former une matrice de résistances de contact variables, pour fournir une information analogique se rapportant à la répartition de la pression de contact sur une superficie, appliquée audit film (4).

2. Transducteur selon la revendication 1, dans lequel ladite électrode de contact (6) comprend une électrode en or.

3. Transducteur selon la revendication 1, dans lequel lesdites électrodes de colonnes de balayage (3) sont dorées.

4. Transducteur selon la revendication 1, dans lequel ledit substrat isolant sensiblement rigide (2) comprend une couche de céramique.

5. Transducteur selon la revendication 1, dans lequel ledit film déformable sensiblement élastique (4) comprend un film de polyimide.

6. Transducteur selon la revendication 1, dans lequel ledit film déformable sensiblement élastique (4) comprend un film de polyamide.

7. Transducteur selon la revendication 1, dans lequel ledit film déformable sensiblement élastique (4) comprend un film de polyester.

8. Transducteur selon la revendication 1, dans lequel ledit dépôt de métal sur ledit substrat pour former lesdites électrodes de lignes de balayage (1) comprend de l'argent.

9. Transducteur selon la revendication 1, dans lequel ledit dépôt de métal sur ledit substrat pour former lesdites électrodes de lignes de balayage (1) comprend du cuivre.

10. Transducteur selon la revendication 1, dans lequel ledit dépôt de métal sur le film déformable sensiblement élastique (4) pour former lesdites électrodes de colonne de balayage (3) comprend du cuivre.

11. Transducteur selon la revendication 1, dans lequel ladite couche résistive mince est attaquée pour former un film de résistance à couche mince (5) qui demeure sensiblement au droit des points d'intersection desdites électrodes de lignes (1) et de colonnes (3).

12. Transducteur selon la revendication 11, comprenant en outre une électrode de contact (6) formée sur chacune desdites résistances à couche mince (5).

13. Transducteur selon la revendication 1, dans lequel plusieurs écarteurs à base d'oxyde (7) sont formés par dépôt d'oxyde sur ledit substrat (2) et sur les électrodes de lignes de balayage (1) et sont attaquées pour former des îlots écarteurs en des points spécifiés.

14. Transducteur selon la revendication 13, dans lequel lesdits écarteurs à base d'oxyde (7) comprennent du dioxyde de tungstène.
